(19) Europäisches Patentamt
European Patent Office
Office européen des brevets

(11) EP 4 067 409 A1

(12) EUROPEAN PATENT APPLICATION

(43) Date of publication:
**05.10.2022 Bulletin 2022/40**

(21) Application number: **21166668.0**

(22) Date of filing: **01.04.2021**

(51) International Patent Classification (IPC):
***C08G 69/26*** *(2006.01)* ***C08L 77/06*** *(2006.01)*

(52) Cooperative Patent Classification (CPC):
**C08G 69/26; C08G 69/265; C08G 69/36**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **EMS-CHEMIE AG**
**7013 Domat/Ems (CH)**

(72) Inventors:
- **Hoffmann, Botho**
**Schwizerland (CH)**
- **Quinlan, Eoin**
**Lichtenstein (LI)**

(54) **RENEWABLE CYCLOALIPHATIC DIAMINES AND POLYMERS THEREOF**

(57) The invention relates to the use of a diamine monomer derived from natural resources in the manufacture of polymers, whereby a renewable carbon index (RCI) with respect to the monomer of at least 0.85 is present.

EP 4 067 409 A1

## Description

Technical Field

The present invention relates to the use of amine-containing monomers derived from natural resources to prepare polymers.

Prior Art

Cycloaliphatic-skeletons form the basis for several relevant chemical intermediates. For example bis(cyclohexyl) systems form the basis for epoxy hardeners or for polyamides.

The manufacture of such bis(cyclohexyl) moieties is known in the art. Typically the starting point for such materials is toluene (found in crude oil) or aniline, formed via the nitration of benzene, which is sourced ultimately from crude oil.

In recent years consumer behaviour has seen a move towards sustainability. This is reflected in industrial practices, as seen in production, including the sourcing of raw materials from renewable resources, rather than from materials that are associated with depletion of fossil fuel reserves. It is also seen in the interest in total life cycle assessment, whereby a product's entire carbon footprint is determined, thus raising the accountability of the manufacturer to the end consumer. A continuing drive in this direction is felt throughout industry. There is therefore a need to bring the polymer industry in line with consumer demands by providing sustainable and renewable analogues in the form of sustainable monomers that can be handled in place of the traditional analogues.

Polyamides derived from natural resources are known in the art. For example DE-A-102014221061 describes how terpenes provide a plentiful carbon skeleton building block that can be converted to a terpene-based lactam and subsequently polymerised under ring-opening conditions to obtain sustainable homo- or copolyamides.

EP-A-2294111 describes polymers that are derived from, in addition to a conventional bis(cyclohexyl) moiety, a dicarboxylic acid of renewable origin. The renewable carbon content (RCC, also denoted RCI for renewable carbon index) of such polymers, for example MACM12, which uses MACM as a diamine component and dodecanedioic acid of renewable origin, plateaus at 44% by weight, due to the higher molecular weight contribution of the diamine compared to the dicarboxylic acid to the overall molecular weight of the repeat unit. Sugars may be converted to 2,5-dimethylfuran by means known in the art. In turn, 2,5-dimethylfuran can be converted to para-xylene (US-B-8314267). Analogously, 2-methylfuran may be converted to toluene in a reaction mediated by a Lewis acid catalyst as described in US-A-20180029959.

Biotechnological conversion of sugars directly to six-membered aromatic moieties is also known in the art, where for example 4-aminobenzoic acid or 2-aminobenzoic (anthranilic) acid can be obtained via fermentative biosynthesis. These methods are described in detail for example in US-B-10173969 and US-A-2014/0371418.

Lignocellulosic biomass, an abundant raw material, and moreover an important waste-product, comprises cellulose and lignin and is formed predominantly in the pulp and paper industry as well as being a by-product of biofuel manufacture. While the cellulose component may be used as a feedstock for sugars, the lignin component can be used as a renewable source of BTX (benzene, toluene and xylenes) as reported in the scientific literature (ACS Sustainable Chem. Eng. 2018, 6, 3472-3480). Such a plentiful renewable source of aromatic moieties that can be reduced to cycloaliphatic groups is otherwise relatively uncommon. There is a need for a wider range of monomers for the preparation of polymers that reflect the growing demands for a low carbon footprint.

Detailed description of the invention

The present invention relates to the use of cycloaliphatic diamines derived from a renewable source. In particular, the invention relates to their use as starting materials for the preparation of polymers.

The invention relates to the use of the biobased monomer of the structure

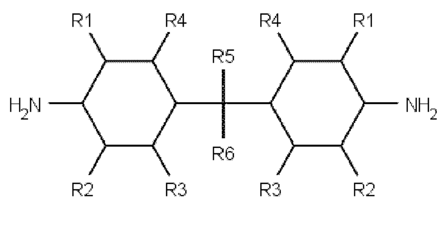

where R1, R2, R3, R4, R5 and R6 are independently selected from hydrogen, C1-C8 alkyl, C1-C8 alkenyl, C1-C8 alkynyl,

substituted or non-substituted cyclohexyl or aryl moieties, in the manufacture of polyamide, characterised by a biobased carbon content of at least 0.85. Biobased carbon content can be determined in accordance with ASTM D6866 or ISO 16620.

More particularly, the invention relates to the use of monomers such as 4,4'-methylenebiscyclohexylamine (PACM) or 4,4'-methylenebis(2-methylcyclohexylamine) (MACM) in the manufacture of polyamide, characterised by a biobased carbon content of at least 0.85.

The invention also relates to a method for preparing polyamides comprising the aforementioned monomers.

ASTM D6866 and ISO 16620 lay out the methodology for analytically determining the biobased carbon content of a sample by measuring the isotopic distribution of the carbon atoms in a sample. Due to the constant turnover of carbon in living organisms by $CO_2$ fixation and respiration, carbon-14 is constantly being replenished. In fossil-derived carbon sources, there has been no recent replacement of carbon and therefore these samples are carbon-14 depleted. By comparing the amount of stable carbon isotopes or their ratios, such as the stable $^{13}C/^{12}C$ pair to the carbon-14 present in the sample, the percentage of modern carbon is determined. The present invention is to be construed particularly in light of the methods of ASTM D6866-18 (approved version of March 2018).

Renewable feedstocks for MACM and PACM respectively are for example, toluene, derived from cycloaddition of 2-methylfuran (from furfural) and ethylene, and aniline derived from the decarboxylation of various isomers of biosynthesised aminobenzoic acids. Lignin is a further suitable source of renewable aromatic moieties. The feedstocks for these are in turn derived from renewable sources such as sugars, starches or pulp. In particular, pulp is sourced from, for example, wood, sawdust, paper or coffee; and sugars are derived from sources such as corn, sugar beet or sugar cane. Suitable sugars include glucose, sucrose, maltose, galactose or xylose. The conversion from sugar to other feedstocks can be achieved by biotechnological processes, notably employing yeast or bacteria. Notably *Escherichia coli* finds particular use in the manufacture of feedstocks for the invention.

The object of the current invention is therefore to provide monomers for use in polymer synthesis, whereby the monomers are of sustainable origin, notably that they contain a demonstrable amount of renewable-origin carbon.

It is within the scope of the invention to use non-biotechnological synthetic methods to affect chemical transformation of the renewably-sourced materials to provide monomers. For example the nitration of toluene with subsequent reduction, the condensation reaction between formaldehyde (derived preferably from a biological source of methanol) and bioderived toluene or bioderived aniline, or the reduction of the aromatic dimer to the bis(cyclohexyl) skeleton. Any of the stages of the chemical transformation may, where necessary, be mediated by an inorganic catalyst. Such catalyst may be a ruthenium or palladium catalyst or a zeolite.

Due to its renewable origin the monomer according to the invention has a biobased carbon content, of at least 85%. Preferably, the biobased carbon content of the monomer is 100%, with the methylene bridging position derived from a biobased source of formaldehyde, such as biosynthetically-derived methanol.

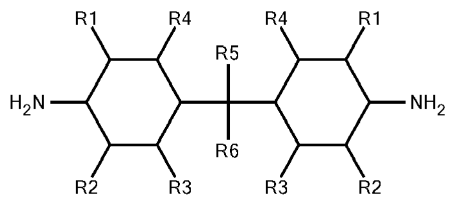

The carbon content is classified according to its renewable carbon index (RCI). This is determined for an individual molecule or monomer, by dividing the number of carbons derived from renewable sources by the total number of carbons.

$$RCI = \frac{\text{number of carbon atoms of renewable origin}}{\text{total number of carbon atoms}}$$

The RCI can be measured experimentally on a sample, determined using one of the methods set out in ASTM D6866 or ISO 16620. RCI is validly expressed either as a quotient or as the equivalent percentage.

For a bis(cyclohexyl) system where R1 = R2 = R3 = R4 = R5 = R6 = H (PACM), the system contains 13 carbon atoms. In the system where R2 = R3 = R4 = R5 = R6 = H, and R1 = $CH_3$ (MACM), 15 carbon atoms are present.

An RCI value of at least 0.92 is preferable in the case of R = H, with 0.93 preferable when R = $CH_3$. Most preferably, the monomer has RCI = 1.

The bis(cyclohexyl)-based system can exist in different isomeric forms. The isomeric forms *trans-trans, cis-trans* and *cis-cis* as well as mixtures of more than one isomeric form are all embodiments of the invention. Preferably

when a mixture of isomers is present, the trans-trans isomer is present at >20 % by weight. Most preferably the trans-trans isomer is present at >45% by weight. The achievement of different ratios of isomers is dependent on the condition at which the hydrogenation of the precursor has occurred and of the purification and isolation undertaken.

Polymers according to the invention

The invention also relates to the use of the monomers in the preparation of polymers. In particular, the invention relates to the use of monomers to form polyamides. Wherever polyamide is referred to in the sense of the current invention, this relates either to a homopolyamide or a copolyamide. Nomenclature used henceforth is in accordance with the standardised designation as laid down in ISO 16396-1:2015.
The polyamide of the current invention further comprises at least one dicarboxylic acid in addition to the inventive cycloaliphatic diamine. The polyamide of the current invention is preferably of the type AABB (also denoted PA XY), formed by condensation of a diamine (X) with a dicarboxylic acid (Y). The polyamide of the invention consists of or comprises the repeating AABB unit. In a further preferred embodiment, the polyamide is of the type AABB/AB (XY/Z) or AABB/A'A'B'B'/AB (XY/X'Y'/Z) where the polyamide is a copolyamide, comprising in addition to the condensation product of the cycloaliphatic diamine and at least one dicarboxylic acid, further diamines and/or further dicarboxylic acids and/or lactams and/or aminocarboxylic acids. The AABB or AB nomenclature represents only the type of repeating unit within the polyamide and does not denote the identity thereof. For AABB/AB there need be no structural similarity between the identities of the AABB and the AB moieties.

As suitable dicarboxylic acids, mention may be made of aliphatic acids. Suitable aliphatic dicarboxylic acids include adipic acid, pimelic acid, suberic acid, azelaic acid, sebacic acid, undecandioic acid, dodecandioic acid, brassylic acid, 1,14-tetradecanedioic acid, 1,15-pentadecanedioic acid, 1,16-hexadecanedioic acid, octadecanedioic acid and dimer fatty acids. As dimer fatty acids, those with 32 to 44 carbon atoms are preferred, with 36 or 44 carbon atoms most preferred.

It is also possible to use further functionalised dicarboxylic acids in the invention. Notably, itaconic acid is preferred.

The dicarboxylic acids used in the invention are preferably of biological origin or have undergone at least one functional group interchange by biotechnological means.

In a further preferred embodiment of the invention, mixtures of aliphatic dicarboxylic acids in conjunction with PACM or MACM of renewable origin are used.

Preferably the dicarboxylic acid used is adipic acid, sebacic acid, 1,12-dodecanedioic acid, 1,14-tetradecanedioic acid, 1,16-hexadecanedioic acid, or a mixture of more than one thereof.

It is also within the scope of the invention to use at least one aromatic dicarboxylic acid. As the at least one aromatic dicarboxylic acid, isophthalic acid, terephthalic acid, 1,8-naphthalenedicarboxylic acid, 2,6-naphthalenedicarboxylic acid, 2,5-furandicarboxylic acid of mixtures thereof are preferred. Most preferably, the at least one aromatic dicarboxylic used is one of isophthalic acid and terephthalic acid.

Copolyamides of the current invention may include one or more of the aforementioned dicarboxylic acids. Furthermore, copolyamides according to the invention may include a second diamine. Suitable diamines include 1,4-butanediamine, 1,5-pentanediamine, 2-methyl-1,5-diaminopentane, 1,6-hexanediamine, 1,7-heptanediamine, 1,8-octanediamine, 1,9-nonanediamine, methyl-1,8-octanediamine, 1,10-decanediamine, 1,11-undecanediamine, 1,12-dodecanediamine, 1,3-cyclohexyl diamine, 1,4-cyclohexyl diamine, 1,3-bis(aminomethyl)benzene (MXD), 1,4-bis(aminomethyl)benzene (PXD), 1,3-bis-(aminomethyl)cyclohexane (1,3-BAC or MC), 1,4-bis-(aminomethyl)cyclohexane (1,4-BAC), isophoronediamine, norbornanedimethylamine, isophorone diamine (IPD) or a mixture of such diamines. The polyamide of the invention is preferably free of an additional diamine of the type PACM or MACM, where the PACM or MACM are of non-renewable origin.

A second or subsequent diamine, where present, is preferably derived from a renewable or biobased carbon source. Suitable diamines include 1,4-butanediamine; 1,5-pentanediamine, derived for example from the decarboxylation of lysine; biobased 1,6 hexamethylendiamine derived for example from glucose; or 1,10-decanediamine derived for example from castor oil. Most preferably the polyamide of the present invention comprises only diamines of renewable origin.

It is a further preferential embodiment of this invention that the monomer is used in systems in which a lactam or an amino acid is copolymerised with the inventive monomer and a dicarboxylic acid. Preferred lactams include caprolactam and laurolactam. Preferred amino acids include 10-aminodecanoic acid, 11-aminoundecanoic acid and 12-aminododecanoic acid. Particular mention is made of the use of 11-aminoundecanoic acid that is derived from castor oil.

The bis-cycloaliphatic monomer of the invention may also be used for the preparation of elastomers. Such elastomers are block copolymers comprising hard polyamide repeating units and soft segment repeating units, such as polyether or polyester units. In particular the soft segments repeating units are preferably based on polytetrahydrofuran (polytetramethylene ether glycol), polyethyleneglycol or polypropyleneglycol. The soft segments may be introduced to

the block copolymer to by either an amide or ester linkage.

This is achieved using either an N-terminated or O-terminated group. The soft segments may also be based on polyamines.

Where the renewable or biobased content of the polymers prepared using the monomers according to the invention are determined according to ASTM D6866, the renewable or biobased diamine monomer will offset the non-renewable dicarboxylic acid monomer in the total carbon content of the polymer.

Microcrystalline polymers

Advantageously, the polyamide prepared using the monomers of the invention is microcrystalline and its degree of crystallinity is greater than 10% and less than 30% as determined by second heating in DSC according to ISO 11357. The melting enthalpy is > 5 J/g and < 40 J/g, preferably < 35 J/g determined using DSC in accordance with ISO 11357. Such microcrystalline polyamides preferably exhibit a $T_m$ (melting temperature) between 110 °C and 270 °C, where $T_m$ is measured in accordance with ISO 11357.

Amorphous polymers

Advantageously, the polyamide derived from the monomer of the present invention is amorphous in nature, that is, it does not exhibit a melting point in a DSC when measured according to ISO 11357. Such polyamides are characterised by their glass transition points (Tg). Preferably it is such that its Tg is between 80 °C and 220 °C, most preferably between 100 °C and 210 °C, where Tg is measured in accordance with ISO 11357. Amorphous polyamides are further characterised by an enthalpy of fusion ≤ 5 J/g, preferably < 3 J/g.

Optical properties

Whether microcrystalline or amorphous in accordance with DSC measurements, the polyamide of the current invention is preferably transparent in its natural state (i.e. prior to addition of dyes, pigments or fillers that may otherwise perturb the transparency).

A transparent polyamide according to the invention is a material that exhibits a transparency of at least 75%, preferably 80%, most preferably 85% when measured in accordance with ASTM D1003 on injection moulded specimens of 2 mm thickness. Furthermore the material also has low haze. The haze of the material, measured on injection moulded specimens as for transparency, prior to the addition of dyes, pigments, fillers or additives, and when tested in accordance with ASTM D1003 is < 15%, preferably < 10%, most preferably < 8%.

The material that results from the invention has good clarity properties as determined by measurement in accordance with ASTM D1003. In a preferred embodiment of the invention, the clarity of the virgin material is >95%. More preferably, the clarity is >98% and most preferably the clarity is >99%.

Moulding compositions

Moulding compositions according to the current invention further comprise modifiers, additives and/or fillers. In one embodiment of the invention, the moulding material consists of the inventive polyamide or copolyamide in addition to further components selected from at least one of modifiers, additives and fillers.

Impact modifiers

The polyamide of the invention may further be modified to adjust its properties according to requirements. Impact modifiers may be used.

Any impact modifier used in the composition is preferably functionalised, either by copolymerisation or by grafting with unsaturated carboxylic acids, carboxylic acid derivatives or glycidyl derivatives.

For impact modifiers that are functionalised by copolymerisation, the degree of functionalisation (amount of unsaturated carboxylic acid) in the copolymerised polyolefin is 3 to 25% by weight, preferably at 4 to 20% by weight, most preferably at 4.5 to 15% by weight, relative to the total weight of impact modifier.

Impact modifiers suitable for use in the invention include those based on ethylene-$\alpha$-olefin copolymers. Suitable impact modifiers in this category include ethylene-propylene copolymers, ethylene-1-butene copolymers, ethylene-octene copolymers or ethylene-propylene-1-butene copolymers.

Where the impact modifier has been modified by grafting, the degree of grafting relative to the total weight of the impact modifier is 0.3 to 2.5% by weight, preferably 0.4 to 2.0% by weight, particularly preferably 0.5 to 1.9% by weight.

It is within the scope of the current invention to make use of core-shell impact modifiers. These impact modifiers

take the form of multilayer polymer particles. The core of these particles is comprised of one polymer while the outer layer, the shell, is comprised of another polymer. The core polymer is preferably selected from the group comprising homopolymers and/or copolymers of isoprene, butadiene and vinyl monomers. The shell polymer preferably comprises The core-shell impact modifier has a weight-average particle size of 20 - 500 nm. The impact modification used in the invention may be selected to have a refractive index aligned with the refractive index of the polyamide moulding composition, in order to reduce or optimise cloudiness, opacity or haze caused by mismatching of the refractive indices components.

Additives

Additional substances to those already mentioned may be added to the polymer derived from the inventive monomers in order to adapt, enhance or improve the material properties. One or more additives may be used as appropriate for the end use, in a concentration that as appropriate to the skilled person. These substances include UV stabilisers, heat stabilisers, antioxidants, lubricants, mould release agents, dyes, pigments, markers, tracers, antistatic agents, flame retardants, synergists, antitumescence agents, cross linking agents, chain extenders, metal deactivators. Antioxidants suitable for use in the invention include most preferably sterically hindered phenols or phosphites.

Fillers

Fillers according to the invention can be particulate or fibrous. Fillers may also be either organic or inorganic. Suitable fillers for the invention include, but are not limited to, carbon fibres, aramid fibres, mica, talc, PTFE powder, kaolin, quartz, silicates, boron fibres, glass fibres, glass flakes, hollow glass spheres, glass beads, calcium carbonate, carbon black, single-wall carbon nanotubes, multiwall nanotubes, graphene, graphite (expanded or non-expanded) and silica.

Where fillers are used, these are to be selected in amounts appropriate and according to their intended use. It may be necessary to optimise the matching of refractive indices of additive and polymer in order to maintain transparency of the overall moulding composition if a transparent moulding composition is required. Furthermore, as the use of fillers is intended to enhance the mechanical properties of the polymers, their use may or may not be detrimental to the transparency of the material. Polymers moulding compositions that comprise pigments, glass fibres, or other opacity-inducing additives are within the scope of the current invention.

Renewable carbon

The invention is characterised by the high component of renewable carbon with respect to the total amount of carbon present. The renewable carbon content, or biobased content, can be determined according to ASTM D6866. This destructive testing procedure determines the total biobased carbon content on the basis of released carbon dioxide when the sample is combusted, and thus can only be used to obtain a statistical average of all biobased carbon content in a substrate. Where a monomer of the present invention is subjected to testing according to the standard, a renewable carbon index (RCI) of 0.85 to 1.0 is expected. The bridging atom between the two cycloaliphatic moieties may or may not be derived from a biobased source. Accounting for this, the renewable carbon content of the monomer is greater than 0.85, and preferably greater than 0.90 and most preferably greater than 0.95 as determined in accordance with ASTM D6866.

Where a polymer is subjected to the measurement according to ASTM D6866, the determined value is based on all carbon atoms in all monomers and/or repeating units. The entire biobased carbon content as a percentage of the polymer will be therefore established.

A polymer prepared using the biobased monomer in an inventive fashion and a dicarboxylic acid also of renewable origin may have an RCI value of up to 1, where the lower value is dependent on the relative contribution of the diamine monomer to the molecular mass of the repeating unit.

Advantages and use of the invention

The monomers of the invention are characterised by their high renewable carbon content. The renewable carbon content of the end polymers can be measured in accordance with ASTM D6866. This test determines the concentration of the "modern carbon" in a sample - in other words, the carbon that is not derived from fossil sources.

When working from biobased aniline, a nitration step is avoided. The raw material for the polycondensation is therefore free of nitrated impurities that may otherwise transfer into the starting materials.

A high proportion of renewable carbon content is desirable due to the low carbon footprint exhibited by the end product. At the end-of-life of the product, its incineration or potential biodegradation releases relatively young carbon

dioxide into the atmosphere, as opposed to that of fossil fuels as hitherto known. The monomer of the invention is thus to be considered as having a low carbon footprint.

The current invention finds use in the polyamide (or nylon) industry and with its consumers, in particular due to the market requirements of end users of polyamides shifting increasingly towards sustainability and environmentally favourable practices.

The present invention satisfies a long-held consumer demand for sustainable diamine starting materials in the production of high-performance polyamides.

In contrast with the prior art, where the renewable content of polymers was limited by the origin and identity of the diamine, the current disclosure enables high concentrations by weight of the polymer to be of biological, sustainable and renewable origin, with biobased carbon concentrations greater than 0.95 achievable.

Use of the monomer according to the invention includes its use in polycondensation reactions for the manufacture of polyamide, polyamide elastomers, polyamide-polyimides, and polyurethane. It also includes the use as hardeners for epoxy resins.

The invention find particular use in the manufacture of compositions for use as foils, films, or as components of spectacle frames, frames, sports equipment, portable electronic devices, housings, mountings, telephones, smartphones, smartwatches, camera domes, surveillance cameras, optical lenses, items of furniture, measuring devices, medical devices, medical receptacles, containers, handles, automotive vehicle parts, decorative objects, camera parts, personal protection equipment, face visors, navigation device components, television sets, packaging and/or wristwatches.

Embodiments of the invention

Selected preferred embodiments of the invention are outlined in Table 1. In these embodiments the methylene bridge of the diamine is derived from a biological source of methanol, thus this too contributes a renewable carbon atom.

The respective repeating units are presented with their total carbon atoms, in addition to the number of carbons of biological or renewable origin per unit, denoted "bio-C". These data are presented for each of diamine(s), dicarboxylic acid(s), and where present lactam(s) and/or ω-amino acid(s). The total contribution of the biologically-sourced carbon atoms is denoted by the RCI value for the diamine component as well as for the diamine-dicarboxylic acid and diamine-dicarboxylic acid/lactam/ω-amino acids systems. From these values, the RCI of the total repeat units of the polymer of the invention can be derived.

Where a copolyamide of the form PA XY/Z is formed, for example PA MACM12/12, PA PACM12/12, PA MACM12/11 or PA PACM12/11, the molar ratio of the XY/Z is in the range from 1:1 to 4:1, preferably 1:1 to 3:1.

The polyamides manufactured by the invention ultimately have a verifiable level of renewable carbon. The polymers thus exhibit an RCI of at least 0.3, preferably 0.4, most preferably 0.51.

Table 1

| Diamine | C atoms | Bio-C | RCI (di-ami ne) | Diacid compo-nent | Short form | C at-oms | Bio-C | Lactam/ω-amino acid | C atoms | Bio-C | Full form; PA | Total number of C atoms | Total Bio-C | RCI (total ) |
|---|---|---|---|---|---|---|---|---|---|---|---|---|---|---|
| MACM | 15 | 15 | 1.0 | 1,12-dodecanedioic acid | 12 | 12 | 0 | | | | MACM12 | 27 | 15 | 0.56 |
| PACM | 13 | 13 | 1.0 | 1,12-dodecanedioic acid | 12 | 12 | 0 | | | | PACM12 | 25 | 13 | 0.52 |
| MACM | 15 | 15 | 1.0 | 1,10-decanedioic acid | 10 | 10 | 10 | | | | MACM10 | 25 | 25 | 1.00 |
| PACM | 13 | 13 | 1.0 | 1,10-decanedioic acid | 10 | 10 | 10 | | | | PACM10 | 23 | 23 | 1.00 |
| MACM | 15 | 15 | 1.0 | 1,12-dodecanedioic acid | 12 | 12 | 12 | | | | MACM12 | 27 | 27 | 1.00 |
| PACM | 13 | 13 | 1.0 | 1,12-dodecanedioic acid | 12 | 12 | 12 | | | | PACM12 | 25 | 25 | 1.00 |
| MACM/PACM molar ratio 5:95 to 95:5 | 13.1-14.9 | 13.1-14.9 | 1.0 | 1,12-dodecanedioic acid | 12 | 12 | 0 | | | | MACM12/PACM12 | 25.1-26.9 | 13.1-14.9 | 0.52-0.55 |
| MACM | 15 | 15 | 1.0 | 1,12-dodecanedioic acid | 12 | 12 | 0 | 12 | 12 | 0 | MACM12/12 | 39 | 15 | 0.38 |
| PACM | 13 | 13 | 1.0 | 1,12-dodecanedioic acid | 12 | 12 | 0 | 12 | 12 | 0 | PACM12/12 | 37 | 13 | 0.35 |
| MACM | 15 | 15 | 1.0 | 1,12-dodecanedioic acid | 12 | 12 | 0 | 11 | 11 | 11 | MACM12/11 | 38 | 26 | 0.68 |

(continued)

| Diamine | C atoms | Bio-C | RCI (di-ami ne) | Diacid compo-nent | Short form | C at-oms | Bio-C | Lactam/ω -amino acid | C atoms | Bio-C | Full form; PA | Total number of C atoms | Total Bio-C | RCI (total ) |
|---|---|---|---|---|---|---|---|---|---|---|---|---|---|---|
| PACM | 13 | 13 | 1.0 | 1,12-dodecanedioic acid | 12 | 12 | 0 | 11 | 11 | 11 | PACM12/ 11 | 36 | 24 | 0.67 |
| MACM | 15 | 15 | 1.0 | isophthalic acid/ terephthalic acid (molar ratio 5:95 to 95:5) | I/T | 8 | 0 | 12 | 12 | 0 | MACMI/ MACMT/12 | 35 | 15 | 0.43 |
| PACM | 13 | 13 | 1.0 | isophthalic acid/ terephthalic acid (molar ratio 5:95 to 95:5) | I/T | 8 | 0 | 12 | 12 | 0 | PACMI/ PACMT/12 | 33 | 13 | 0.39 |
| MACM | 15 | 15 | 1.0 | isophthalic acid | I | 8 | 0 | 12 | 12 | 0 | MACMI/12 | 35 | 15 | 0.43 |
| MACM | 15 | 15 | 1.0 | 1,14-tetradecanedioic acid | 14 | 14 | 14 | 12 | 12 | 0 | MACM14 | 41 | 29 | 0.71 |
| MACM | 15 | 15 | 1.0 | 1,16-hexadecanedioic acid | 16 | 16 | 0 | | | | MACM16 | 31 | 15 | 0.48 |
| MACM | 15 | 15 | 1.0 | 1,18-octadecanedioic acid | 18 | 18 | 18 | | | | MACM18 | 33 | 33 | 1.00 |
| PACM | 13 | 13 | 1.0 | 1,14-tetradecanedioic acid | 14 | 14 | 14 | | | | PACM14 | 27 | 27 | 1.00 |
| PACM | 13 | 13 | 1.0 | 1,16-hexadecanedioic acid | 16 | 16 | 0 | | | | PACM16 | 29 | 13 | 0.45 |
| PACM | 13 | 13 | 1.0 | 1,18-octadecanedioic acid | 18 | 18 | 18 | | | | PACM18 | 31 | 31 | 1.00 |

(continued)

| Diamine | C atoms | Bio-C | RCI (di-ami ne) | Diacid compo-nent | Short form | C at-oms | Bio-C | Lactam/ω -amino acid | C atoms | Bio-C | Full form; PA | Total number of C atoms | Total Bio-C | RCI (total ) |
|---|---|---|---|---|---|---|---|---|---|---|---|---|---|---|
| MACM | 15 | 15 | 1.0 | 1,14-tetradecanedioic acid | 14 | 14 | 14 | 12 | 12 | | MACM14/12 | 41 | 29 | 0.71 |
| MACM | 15 | 15 | 1.0 | 1,16-hexadecanedioic acid | 16 | 16 | 0 | 12 | 12 | | MACM16/12 | 43 | 15 | 0.35 |
| MACM | 15 | 15 | 1.0 | 1,18-octadecanedioic acid | 18 | 18 | 18 | 12 | 12 | | MACM18/12 | 45 | 33 | 0.73 |
| PACM | 13 | 13 | 1.0 | 1,14-tetradecanedioic acid | 14 | 14 | 14 | 12 | 12 | | PACM14/12 | 39 | 27 | 0.69 |
| PACM | 13 | 13 | 1.0 | 1,16-hexadecanedioic acid | 16 | 16 | 0 | 12 | 12 | | PACM16/12 | 41 | 13 | 0.32 |
| PACM | 13 | 13 | 1.0 | 1,18-octadecanedioic acid | 18 | 18 | 18 | 12 | 12 | | PACM18/12 | 43 | 31 | 0.72 |
| MACM | 15 | 15 | 1.0 | 1,14-tetradecanedioic acid | 14 | 14 | 14 | 11 | 11 | | MACM14/11 | 40 | 29 | 0.73 |
| MACM | 15 | 15 | 1.0 | 1,16-hexadecanedioic acid | 16 | 16 | 0 | 11 | 11 | | MACM16/11 | 42 | 15 | 0.36 |
| MACM | 15 | 15 | 1.0 | 1,18-octadecanedioic acid | 18 | 18 | 18 | 11 | 11 | | MACM18/11 | 44 | 33 | 0.75 |
| PACM | 13 | 13 | 1.0 | 1,14-tetradecanedioic acid | 14 | 14 | 14 | 11 | 11 | | PACM14/11 | 38 | 27 | 0.71 |

(continued)

| Diamine | C atoms | Bio-C | RCI (di- ami ne) | Diacid compo- nent | Short form | C at- oms | Bio-C | Lactam/ω -amino acid | C atoms | Bio-C | Full form; PA | Total number of C atoms | Total Bio- C | RCI (total ) |
|---|---|---|---|---|---|---|---|---|---|---|---|---|---|---|
| PACM | 13 | 13 | 1.0 | 1,16- hexadecanedioic acid | 16 | 16 | 0 | 11 | 11 | | PACM16/11 | 40 | 13 | 0.33 |
| PACM | 13 | 13 | 1.0 | 1,18- octadecanedioic acid | 18 | 18 | 18 | 11 | 11 | | PACM18/11 | 42 | 31 | 0.74 |

Means of carrying out the invention

The monomer of the invention is polymerised using the methods known in polymer chemistry, typically by means of polycondensation of a diamine with a dicarboxylic acid. It is also possible to prepare polyamides by reaction of the monomer of the invention with acid chlorides.

For example, polycondensation of PACM with a renewable carbon index of 0.93 with 1,12-dodecanedioic acid in the presence of water and an acid catalyst. Following condensation in an autoclave, the material is cooled, decompressed and degassed. The polymer is subsequently extruded as a strand and granulated.

## Claims

1. Use of a bis-cycloaliphatic monomer of the structure

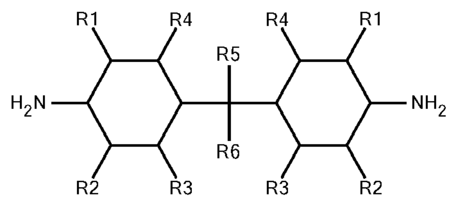

where R1, R2, R3, R4, R5 and R6 are selected independently as hydrogen, C1-C8 alkyl, alkenyl, alkynyl or cyclohexyl, in the manufacture of a polymer, **characterised by** a renewable carbon index (RCI) with respect to the monomer of at least 0.85.

2. The use of the monomer according to claim 1, where R2, R3, R4, R5 and R6 are hydrogen.

3. The use of the monomer according to claims 1 or 2, where R2, R3, R4, R5 and R6 are hydrogen and R1 is hydrogen or methyl.

4. The use of the monomer according to one of the previous claims where the monomer is derived from bio-derived aniline

5. Use of the monomer according to one of claims 1-3 where the monomer is derived from bio-derived toluene.

6. Use of the monomer according to one of the previous claims where the polymer is a polyamide.

7. Polyamide comprising biobased diamine monomer of the structure

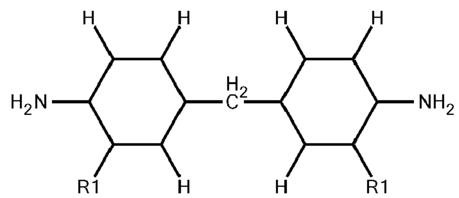

where R1 is selected from hydrogen, C1-C8 alkyl, alkenyl, alkynyl or cyclohexyl, **characterised by** a renewable carbon index (RCI) with respect to the biobased diamine monomer of at least 0.85.

8. Polyamide according to claim 7, where R1 is methyl or hydrogen, preferably hydrogen.

9. A polyamide moulding composition comprising the polyamide of claim 7 or 8, where the composition further comprises at least one additive or modifier selected from the group consisting of impact modifiers, plasticisers, antioxidants, flame retardants, inorganic fillers, reinforcement fibres, fillers, pigments, dyes and mixtures thereof.

10. A moulded object comprising the polyamide moulding composition of claim 9.

**11.** A moulded object according to claim 10, whereby the moulded object is selected from the group consisting of foils, films, spectacle frames, lenses, frames, mirrors, sports equipment, portable electronic devices, data storage devices, household equipment, kitchen equipment, housings, mountings, telephones, smartphones, items of furniture, measuring devices, medical devices, medical receptacles, containers, handles, automotive vehicle parts, key parts, temperature sensors, remote controls, decorative objects, camera parts, navigation device components, television sets, audio equipment parts, packaging and wristwatches.

**12.** Method of manufacture of a biobased polyamide comprising the steps:

a) providing a diamine of the structure

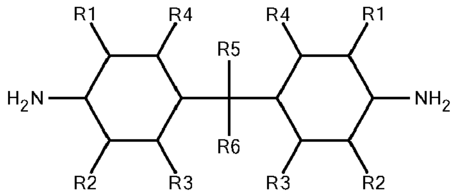

where R1, R2, R3, R4, R5 and R6 are independently selected from hydrogen, C1-C8 alkyl, C1-C8 alkenyl, C1-C8 alkynyl, substituted or non-substituted cyclohexyl or aryl;
b) subjecting the diamine to a polycondensation reaction with at least one dicarboxylic acid and optionally at least one of a lactam, an w-amino acid or mixtures thereof;
c) isolating the polymer formed,

**characterised by** a renewable carbon index (RCI) with respect to the diamine of at least 0.85.

**13.** Method of manufacturing a biobased polyamide according to claim 10, **characterised by** a renewable carbon index (RCI) with respect to the polymer of at least 0.3.

Europäisches Patentamt
European Patent Office
Office européen des brevets

# EUROPEAN SEARCH REPORT

Application Number
EP 21 16 6668

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/171408 A1 (SAILLARD BENJAMIN [FR] ET AL) 14 July 2011 (2011-07-14)<br>* paragraph [0162] - paragraph [0169]; example A *<br>* paragraph [0216]; claims 11, 13 *<br>* paragraph [0162] *<br>* paragraph [0140] *<br>* table 1 *<br>----- | 1-13 | INV.<br>C08G69/26<br>C08L77/06 |

TECHNICAL FIELDS SEARCHED (IPC)
C08G
C08L

The present search report has been drawn up for all claims

| Place of search | Date of completion of the search | Examiner |
|---|---|---|
| Munich | 15 September 2021 | Ojea Jimenez, Isaac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 21 16 6668

This annex lists the patent family members relating to the patent documents cited in the above-mentioned European search report. The members are as contained in the European Patent Office EDP file on
The European Patent Office is in no way liable for these particulars which are merely given for the purpose of information.

15-09-2021

| Patent document cited in search report | Publication date | Patent family member(s) | Publication date |
|---|---|---|---|
| US 2011171408 A1 | 14-07-2011 | BR PI0913264 A2 | 26-01-2016 |
| | | CN 102067014 A | 18-05-2011 |
| | | EP 2288956 A1 | 02-03-2011 |
| | | FR 2932808 A1 | 25-12-2009 |
| | | JP 6154574 B2 | 28-06-2017 |
| | | JP 6215274 B2 | 18-10-2017 |
| | | JP 2011524929 A | 08-09-2011 |
| | | JP 2015214710 A | 03-12-2015 |
| | | KR 20110031156 A | 24-03-2011 |
| | | TW 201005001 A | 01-02-2010 |
| | | US 2011171408 A1 | 14-07-2011 |
| | | US 2018066108 A1 | 08-03-2018 |
| | | WO 2009153534 A1 | 23-12-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102014221061 A
- EP 2294111 A
- US 8314267 B
- US 20180029959 A
- US 10173969 B
- US 20140371418 A


### Non-patent literature cited in the description


- *ACS Sustainable Chem. Eng.,* 2018, vol. 6, 3472-3480